(19) Europäisches Patentamt / European Patent Office / Office européen des brevets

(11) **EP 2 148 220 B1**

(12) **EUROPEAN PATENT SPECIFICATION**

(45) Date of publication and mention
of the grant of the patent:
**30.08.2017 Bulletin 2017/35**

(21) Application number: **08425498.6**

(22) Date of filing: **24.07.2008**

(51) Int Cl.:
*G01S 13/93* *(2006.01)*     *G01S 17/93* *(2006.01)*
*B60W 30/06* *(2006.01)*     *B62D 15/02* *(2006.01)*

(54) **A motor-vehicle driving assistance system based on radar sensors for detecting the presence of obstacles in an area behind and/or beside the vehicle, particularly for parking assistance**

Motorfahrzeug-Antriebshilfssystem basierend auf Radarsensoren zur Erkennung des Vorhandenseins von Hindernissen in dem Bereich hinter und/oder neben dem Fahrzeug, insbesondere Parkhilfe

Système d'aide à la conduite de véhicule à moteur basé sur des capteurs de radar pour détecter la présence d'obstacles dans la zone derrière et/ou sur le côté du véhicule, en particulier pour l'aide au garage

(84) Designated Contracting States:
**DE FR IT**

(43) Date of publication of application:
**27.01.2010 Bulletin 2010/04**

(73) Proprietor: **Magneti Marelli S.p.A.**
**20011 Corbetta (MI) (IT)**

(72) Inventor: **Marenco, Daniele**
**10078 Venaria (Torino) (IT)**

(74) Representative: **Deambrogi, Edgardo et al**
**Jacobacci & Partners S.p.A.**
**Corso Emilia 8**
**10152 Torino (IT)**

(56) References cited:
**EP-A- 0 899 583       DE-B3- 10 349 755**
**GB-A- 2 385 570       US-A- 4 931 930**
**US-B1- 6 265 968**

**Description**

The present invention relates to vehicle driving assistance systems and, in particular, to systems for assisting driving in relation to the "sideways" movements performed by the vehicle, particularly for parking assistance.

More specifically, the invention relates to a motor-vehicle driving assistance system according to the preamble to Claim 1, as disclosed in US 4, 931, 930. Document DE10349755 discloses a vehicle driving assistance system with two different operating modes (parking, lane changing), which are activated depending on the speed of the vehicle. There are known parking assistance systems that are based on the provision of ultrasound or radar sensors which are incorporated in the vehicle bodywork and are adapted to detect the presence of obstacles (generally but not exclusively other vehicles) in proximity of the vehicle with a view to a parking operation and to monitor the distance of the vehicle from the obstacles during the parking operation.

An object detection device designed so that it can be used advantageously for detecting and measuring parking spaces when the vehicle speed is below a threshold value is, for example, disclosed in US 6,265,968.

For this purpose, sensors are installed on the vehicle in positions such that their field of view extends sideways and only partially rearwardly relative to the vehicle. To enable a vehicle to be parked both on the right-hand side and on the left-hand side of the road, it is known to equip the vehicle with a pair of such sensors, arranged symmetrically, for example, on the rear bumper or in proximity thereof, in the region of the corner of the vehicle's shape. Specifically, for semi-automatic/automatic parking systems, the sensors are arranged at the side of the vehicle so as to assess the parking area; for conventional parking systems with acoustic warning, four ultrasound sensors are normally used; the sensors are arranged in the rear bumper, two in central positions and the other two at the sides, in the corner regions.

Ultrasound sensors enable the presence of a reflective obstacle to be detected within a sound-wave propagation area in proximity of the vehicle. Radar sensors enable the presence of a reflective obstacle to be detected within a predetermined field of view, with a more precise distance measurement depending on the wavelength used.

During a parking operation, use is made solely of the signal of the sensor that is disposed on the side of the vehicle on which the parking is taking place. The absence of an obstacle (and hence the absence of a return signal of a periodic interrogation signal) determines the detection of a free space in the proximity of the vehicle, for example, a parking bay the size of which, in particular the length in the direction of travel of the vehicle, is calculated indirectly on the basis of the odometer signal that is available in the vehicle, i.e. of the distance travelled by the vehicle as it passes beside the free space.

Disadvantageously, the above-described detection technique suffers from poor accuracy since its combination with the odometer signal, which is generally obtained by means of a phonic wheel of the ABS system, renders the precision of the location of the free space and of the measurement of its size dependent on the start-of-measurement reference position and on the actual diameter of the vehicle wheels, that is, on their state and inflation pressure.

The object of the present invention is to provide an improved driving assistance system that offers greater precision and accuracy of detection during a parking manoeuvre, which is necessary for the automation of an assisted parking system, and that also provides greater functionality and improved performance in comparison with the solutions of the prior art whilst still having structural simplicity and low costs.

According to the present invention, this object is achieved by virtue of a driving assistance system having the characteristics defined in Claim 1.

Specific embodiments form the subjects of the dependent claims which should be considered an integral and component part of this description.

Briefly, the invention is based upon the principle of utilizing the availability of signals relating to the detection of the environment outside the vehicle, in particular, of a plurality of different areas around the vehicle, adapting the configuration of the system according to the possible types of parking (lateral (parallel) in-line parking, rearward parking in a bay)) particularly for manoeuvres to park the vehicle in reverse.

The system preferably has available in the rear portion of the vehicle, a plurality of radar detectors which can be oriented, whose field of observation can be oriented in a controlled and integrated manner on the basis of commands indicative of the running condition of the vehicle and of the driver's commands.

The arrangement of the detectors can be utilized to implement an integrated driving assistance system, in relation to lateral movements of the vehicle, with the functional capabilities of a system for assisting driving during lane-changing and overtaking manoeuvres.

Further characteristics and advantages of the invention will be explained in greater detail in the following specific description which is given by way of non-limiting example with reference to the appended drawings, in which:

Figure 1 is a schematic block diagram of a driving assistance system of the invention,

Figures 2a and 2b show generically two operating modes of the sensor devices of the system of Figure 1,

Figures 3a-3d are representations of the fields of view of the sensors of Figure 1 in the operating modes provided for by the system,

Figure 4 is a finite states representation of the high-level control of the operating modes of the system of the invention.

Figures 5a and 5b are a block diagram of an operating mode of the system for the purposes of a lateral parking manoeuvre and a graphic representation associated with the step of the assessment of the respective manoeuvring area, respectively, and

Figures 6a and 6b are a block diagram of an operating mode of the system for the purposes of a rearward parking manoeuvre and a graphic representation associated with the step of the assessment of the respective manoeuvring area, respectively.

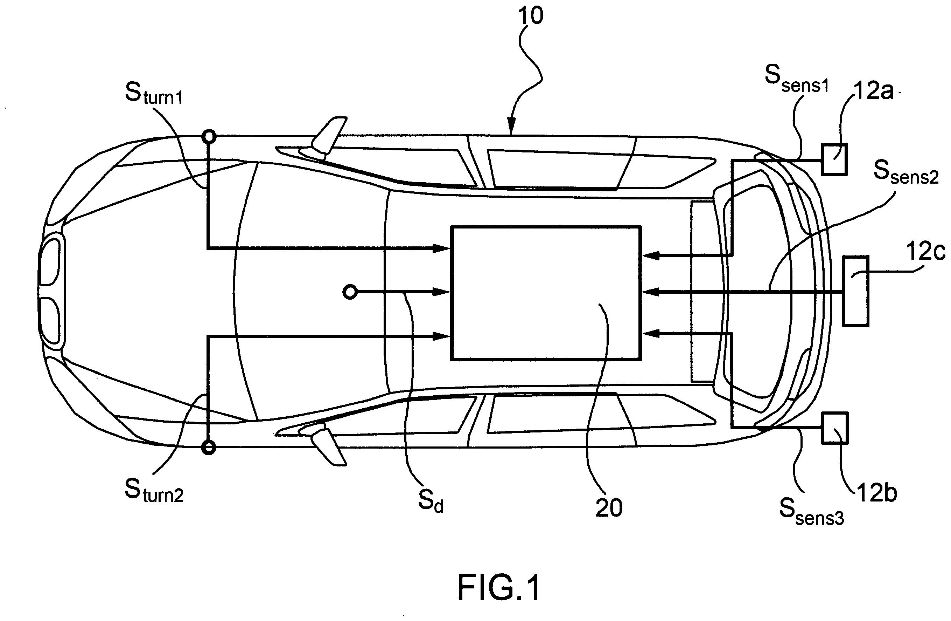

Figure 1 shows a block circuit diagram of a driving assistance system relating to the lateral movements performed by the vehicle, particularly for parking assistance, according to the invention.

A vehicle is generally indicated 10. A plurality of sensor devices adapted to detect the presence of obstacles within a predetermined field of view beside and/or behind the vehicle is provided in a rear portion of the vehicle, for example, in the region of the rear bumper, and includes a pair of lateral sensors 12a and 12b and a central sensor 12c.

The sensors 12a-12c are preferably orientable radar sensors, the orientation of which is controlled by conventional actuator means (not shown) such as continuous or stepping servo-motors or even a "Hall effect" (electro-magnet) switching system, and for which the respective field of view is configurable with respect to the position of the vehicle. A compact, movable, rotary support is provided for each sensor device, which can cover an angular rotation range of 180°, thus enabling each radar sensor to rotate towards both sides of the vehicle, irrespective of its arrangement on the vehicle.

An on-board electronic processing unit 20 is adapted to receive as inputs the obstacle-detection signals $s_{sens1}$-$s_{sens3}$ emitted by the sensors, as well as a signal $s_d$ indicative of the running condition of the vehicle, and signals $s_{turn1}$, $s_{turn2}$ which are indicative of the driver's manoeuvre signalling commands, mainly of the activation of the direction indicator devices of the vehicle.

The processing unit 20 is arranged to assess the free manoeuvring area for the vehicle in a predetermined lateral or rear manoeuvring region according to the positions of the obstacles detected by the sensors 12a-12c.

The processing unit 20 is advantageously adapted to adopt one of a plurality of predetermined operating modes relating to the assessment of the manoeuvring area for the vehicle on the basis of the signals $s_d$, $\delta_{turn1}$ and $\delta_{turn2}$, and to provide data representing the assessed area to actuator devices for manoeuvring the vehicle automatically or to driver warning devices.

Specifically, for the purposes of the present invention, the signal $s_d$ that is indicative of the running condition of the vehicle is adapted to distinguish between a condition of forward movement at a cruising speed above a first predetermined threshold, a condition of forward travel of the vehicle at a reduced speed, below a second predetermined threshold, for approaching the side of the road, and a reversing condition which is adopted, for example, for a rearward manoeuvre to park in a bay, or a parallel lateral parking manoeuvre to park in line close to the right-hand or left-hand edge of the road, respectively.

The processing unit is arranged to associate the condition of forward movement at the approach speed with a first operating mode of the system for assisting lateral (in line) parking and to associate the reversing condition without activation of the direction indicators with a second operating mode of the system for assisting rearward parking (in a bay).

The processing unit is also arranged to associate the condition of forward movement at cruising speed with a third operating mode of the system for assisting lane-changing such as may take place during overtaking manoeuvres which are deliberate (for example, because the direction indicators are activated appropriately by the driver) or in the event of an involuntary deviation from the lane of movement.

The actuator means for controlling the orientation of the sensor devices are adapted to bring about the rotation of the devices from a rest condition or from a previous operative condition to a target operative condition in accordance with instructions issued by the processing unit 20, on the basis of the operating mode recognized. In particular, in the first, lateral parking operating mode, the field of view of the sensor devices is a short-range field of view facing sideways on that parking side which is indicated by the direction indicators, in the second, rearward operating mode for parking in a bay, the field of view of the sensor devices is a short-range field of view facing rearwardly relative to the vehicle and, in the third operating mode, the field of view of the sensor devices is a long-range field of view facing rearwardly relative to the vehicle.

The use of three radar sensor devices arises from the need to have available sufficient data to improve the reliability of the assessment of the free manoeuvring area which, as will be seen from the following description, comprises operations to filter, track and merge the data transmitted by the signals $s_{sens1}$-$s_{sens3}$.

To enable all of the proposed driving assistance functions to be implemented, the radar sensor devices are advantageously selected as:

- one LRR long-range radar and two MRR medium-range radars;
- UWB radars operating in a wide band (ultra wide band = 4-5 GHz) in order to have better resolution in the measurement of the distances of the obstacles;
- radars with central operating frequencies that are as high as possible in order to have better resolution in the measurement of the angular positions of the obstacles (79 GHz radars are preferred).

An alternative to the use of a plurality of radar sensors is the use of a single scanning laser sensor, also installed in the rear portion of the vehicle. This solution would permit a considerable reduction in the complexity of the system since the scanning laser sensor has a horizontal field of view of almost 180° so that neither a movable orientation system nor a processing unit 20 would be required since it would be possible to avoid the tracking and merging of the data.

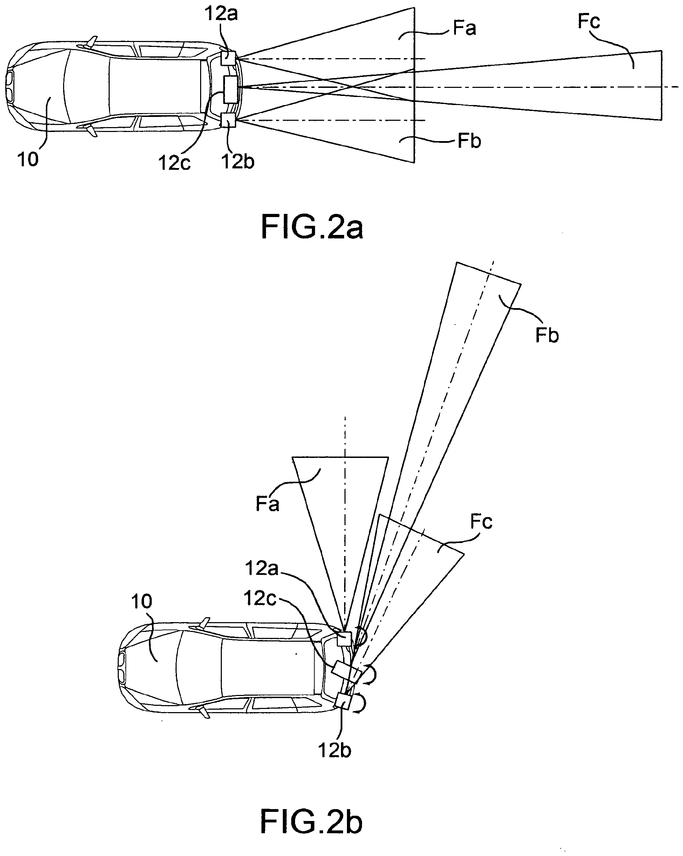

Figures 2a and 2b show two examples of possible orientations of the sensors 12a-12c and the respective fields of view Fa-Fc in two different operating modes, that is, an operating mode for assisting lane-changing or rearward parking and an operating mode for assisting lateral parking.

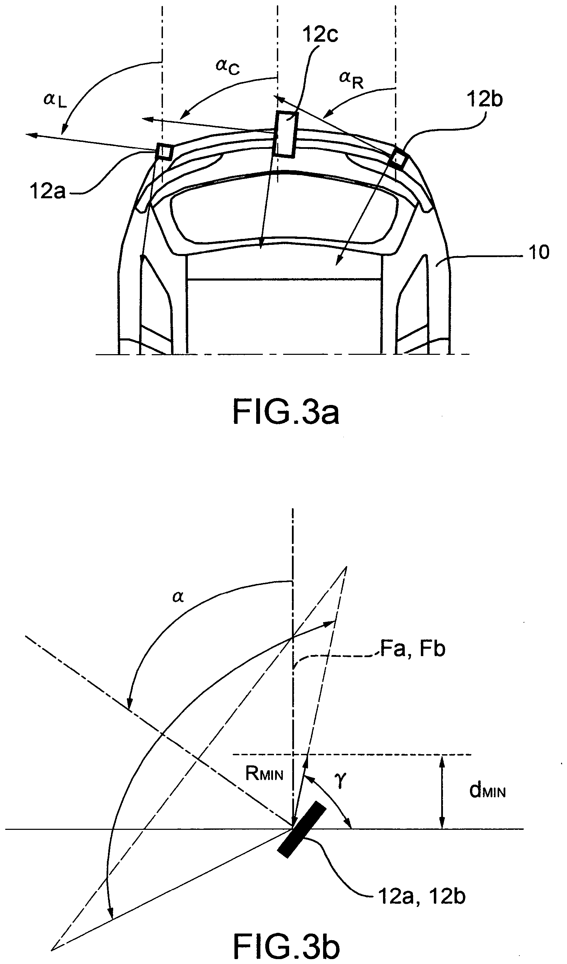

The radar sensors are orientable in specific directions that are connected with the function which is active. In particular, three directional configurations are advantageously provided for; these are assembled in the following table in which they are expressed with respect to the reference system indicated in Figure 3a.

| Function | left sensor | central sensor | right sensor |
|---|---|---|---|
| **Lateral parking assistance (left-hand side)** | $-75° < \alpha_L < -65°$ | $-25° < \alpha_R < -15°$ | $35° < \alpha_L < 45°$ |
| **Lateral parking assistance (right-hand side)** | $-45° < \alpha_L < -35°$ | $15° < \alpha_R < 25°$ | $65° < \alpha_R < 75°$ |
| **Lane-changing assistance Rearward parking assistance** | $5° < \alpha_L < 15°$ | $\alpha_C = 0°$ | $-15° < \alpha_R < -5°$ |

The indications given in the table are provided in accordance with geometrical considerations, in typical parking conditions, down to a distance $d_{MIN}$ of the vehicle from the closest obstacle and for the presence of the obstacle within the field of view F of the sensor, beyond the respective minimum range limit ($R_{MIN}$).

Figures 3b-3d show in detail an example of the orientation of the sensors within the reference system indicated in Figure 3a.

In the lane-changing assistance (LCA) and rearward parking assistance (RPA) operating mode, the central radar sensor 12c faces in the direction $\alpha_C = 0°$ whereas the lateral radar sensors face in directions $\alpha$ that are connected with the parameters of the sensors themselves ($R_{MIN}$ e $F > 45°$) and with the minimum distance $d_{MIN}$, by the following equations:

$$\gamma = ar\sin\left(\frac{d_{MIN}}{R_{MIN}}\right)$$

$$\alpha = \frac{FOV}{2} - \left(90° - \gamma\right)$$

$$\Downarrow$$

$$\alpha = \frac{FOV}{2} - \left(90° - ar\sin\left(\frac{d_{MIN}}{R_{MIN}}\right)\right)$$

Typical values of:

$FOV = 140°$; $R_{MIN} = 0,2$ m; $d_{MIN} = 0,1$ m

give:

$\alpha = 10°$ (left-hand radar) e $\alpha = -10°$ (right-hand radar)

Figure 3b shows the optimal orientation of the lateral sensors 12a and 12b.

In the lateral assistance parking (LPA) operating mode on the right-hand or left-hand side of the road, the optimal direction of the radars is more complex to assess since it is necessary to be able to recognize close obstacles both on the side on which it is intended to park and in the region behind the vehicle.

The best solution is obtained by a compromise of the angular orientations of all of the radar sensors as described below.

Upon the assumption that an in-line parking manoeuvre is to be performed on the right-hand side of the road, the radar sensor 12a on the side closest to the free parking area will adopt an orientation that is given by the following equations:

$$\gamma = ar\cos\left(\frac{d_{MIN}}{R_{MIN}}\right)$$

$$\alpha = 90° - \left(\gamma + \frac{FOV}{2}\right)$$

$$\Downarrow$$

$$\alpha = 90° - \left(ar\cos\left(\frac{d_{MIN}}{R_{MIN}}\right) + \frac{FOV}{2}\right)$$

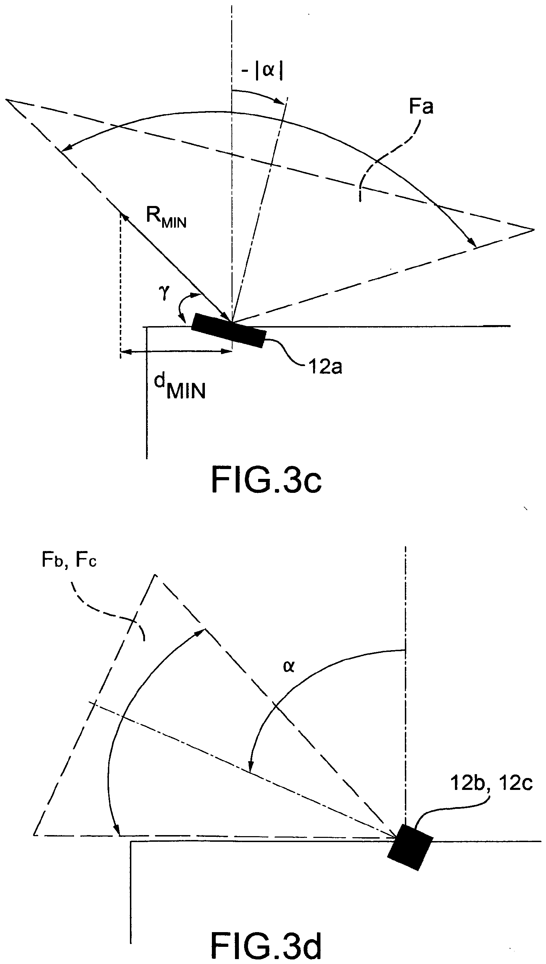

and is shown in Figure 3c for typical values of:

$FOV = 140°$; $R_{MIN} = 0,2$ m; $d_{MIN} = 0,1$ m

where

$\alpha = $ -40°

The radar sensor 12b on the side farthest from the free parking area and the central sensor 12c will adopt an orientation given by the following equation:

$$\alpha = 90° - \frac{FOV}{2}$$

With reference to Figure 3d, typical values of the central radar sensor of:

$FOV = 40°$; $R_{MIN} = 0,5$ m; $d_{MIN} = 0,1$ m

give:

$\alpha = 20°$

and typical values of the central radar sensor of:

$FOV = 140°$; $R_{MIN} = 0,2$ m; $d_{MIN} = 0,1$ m

on the other hand, give:

$\alpha = 70°$

The processing unit 20 operates as follows.

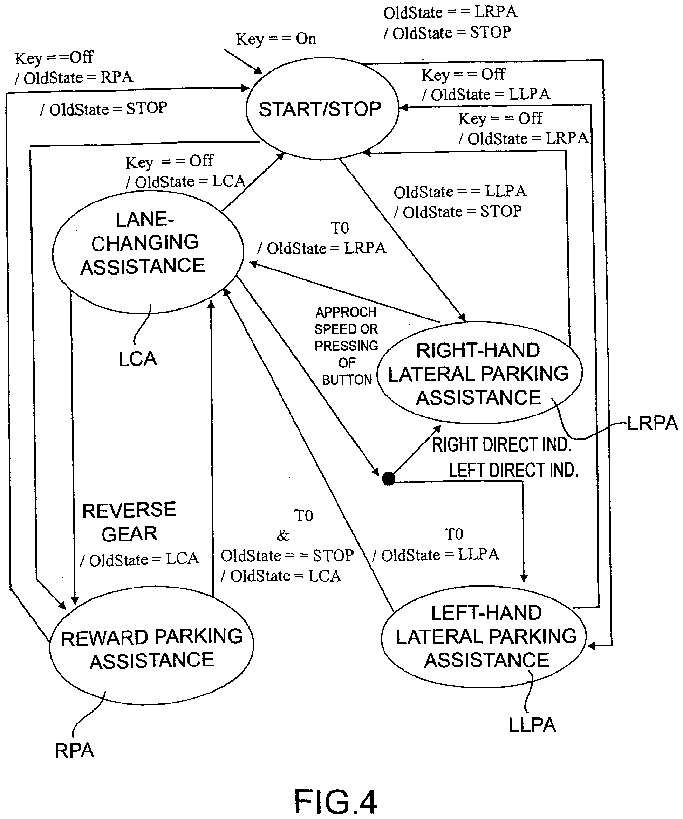

The high-level control of the various operating modes is described with reference to Figure 4 which is a diagram of the states of the system of the invention.

The high-level control is implemented by a finite state machine incorporated in the processing unit 20. There is provision for a START/STOP support state which the system assumes when the vehicle is started or switched off or, optionally, in the event of automatic or manual de-activation of the driving assistance system, and four different operative states, each adapted to perform a different driving assistance function, that is, for lane-changing assistance (LCA), for rearward parking assistance (RPA), and for lateral parking assistance (LPA) further subdivided, according to the parking side, into parking on the right-hand side of the vehicle (LRPA) and parking on the left-hand side of the vehicle (LLPA), respectively.

When the car is switched on, the system assumes the START/STOP state; from this state, the system changes to one of the parking assistance states on the basis of the previous state (OldState variable) of the finite state machine before the car was switched off, which is indicated by the condition KEY = OFF.

More specifically, if the previous parking assistance state is RPA, the rearward parking assistance function will be called up again whereas if the previous parking assistance state is LLPA or LRPA, the lateral parking assistance function relating to the opposite side (LRPA or LLPA, respectively) will be called up to permit monitoring whilst leaving the parking space.

The assistance function that is called up when the vehicle is started is kept active for an initial period of time T0 of about 30s so as to provide help in manoeuvring out of the parking space.

When the initial period of time T0 has elapsed, the system activates the lane-changing assistance function (LCA) as the default function, hence assuming that the operation of leaving the parking space has been completed within this period of time.

When the driver intends to perform a parking manoeuvre into a bay in reverse, upon the engagement of reverse gear, the system switches to the RPA state, that is, to the operating mode with the rearward parking assistance function.

If the driver intends to perform a parking manoeuvre to park in line on the side of the road in reverse, so that the desired side is approached at a distance of about 0.5 - 1 m from parked vehicles or existing obstacles, when a low approach speed below a predetermined threshold is reached, or as a result of the execution of a deliberate switching command (for example, by pressing a lateral parking assistance button) the system switches to the LRPA or LLPA state, that is, into one of the operating modes with a lateral parking assistance function, on the basis of the direction indicator activated by the driver.

It should be pointed out that, owing to the way in which the finite state machine is defined, in the event of forward parking, the system is arranged to activate the rearward parking assistance operating mode (the RPA state) to help the driver to leave the parking bay, enabling the presence or arrival of vehicles in the area behind the vehicle to be recognized and signalled.

The strategies for the processing of the data detected by the sensors in order to implement the operating modes provided for are described in detail below.

_Lateral parking_

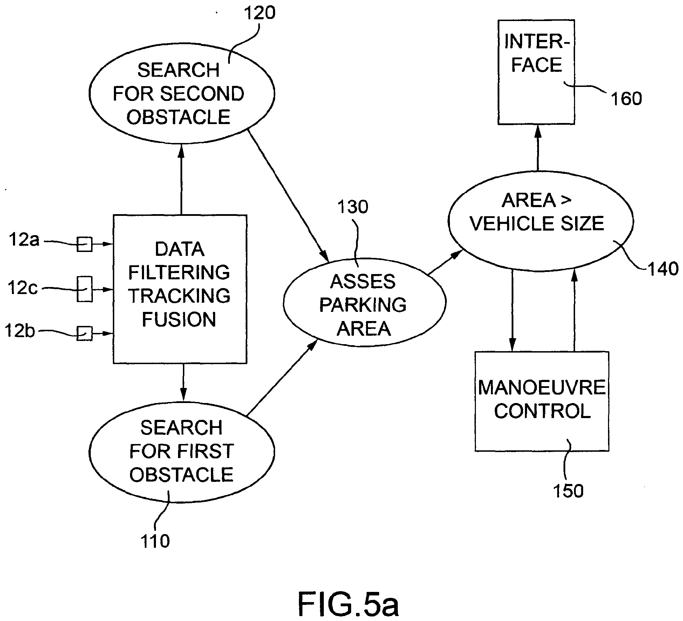

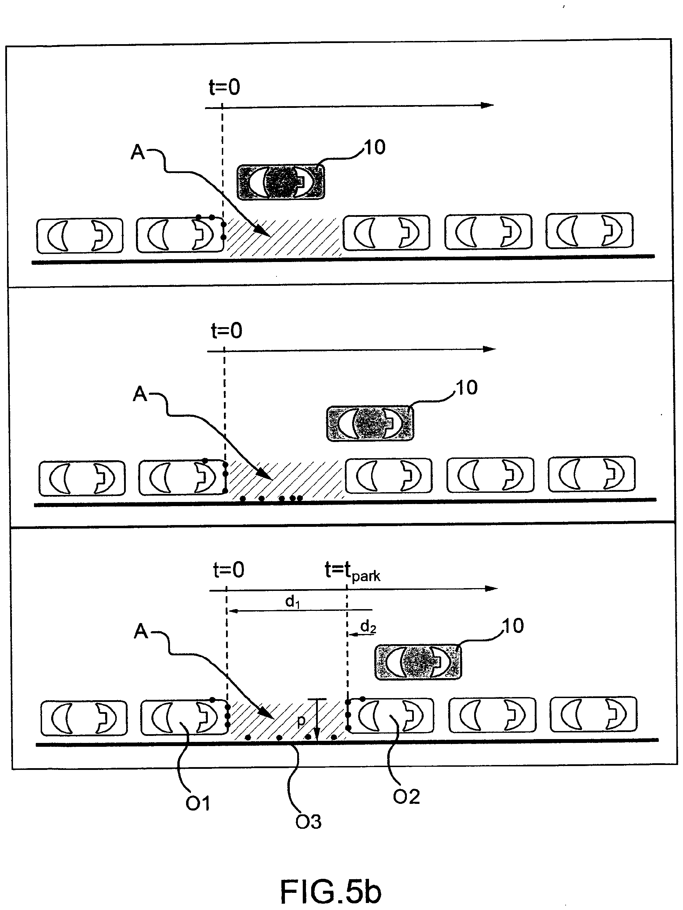

In an operating mode for assisting lateral in line parking, shown in Figures 5a and 5b, the vehicle must be able to perform a safe parking manoeuvre within a free area A in a parking space, which free area A is determined by the distance $d_1$ from a first obstacle O1, by the distance $d_2$ from a second obstacle 02, both detected by the sensors 12a-12c which are oriented in the same way on the parking side, and by the lateral depth $p$ relative to a third, central obstacle 03.

In general, the unit 20 is arranged to filter the data coming from the radar sensors to eliminate spurious signals and to compare the filtered data with a predetermined mask adapted to define a manoeuvring region of interest (a nominal minimum manoeuvring area), that is, a free area of dimensions appropriate for the size of the vehicle and the manoeuvring space necessary for parking it.

The processing unit performs a step for tracking and fusion of the data obtained by a correlation with the already existing traces so as to obtain a plurality of concordant obstacle detection data. In fact, since multiple reflections of the radar signal may occur, to validate the data detected by the sensors, it is necessary to track the obstacles over time in order to check that they are detected persistently in accordance with the relative motion with which they are moving; thus, in addition to algorithms for predicting the positions of the various targets, it is possible to make up for a lack of detection by the sensors for certain moments in time and to eliminate false obstacles produced by the combination of several reflections.

In steps 110 and 120, the obstacle detection data (identified in Figure 5b by discrete points along the profiles of stationary vehicles) is processed as described above to identify, in succession, the presence of a first and a second front corner or surface, that is, a corner or surface closest to the vehicle, delimiting the manoeuvring area A (indicated by hatching). The search for the first corner starts as soon as the parking function is activated with the vehicle in motion; when the first corner has been detected, the search continues for the second corner with the vehicle proceeding at the approach speed; during the period of time between the detection of the first corner and the detection of the second corner, the processing unit assesses whether sufficient manoeuvring area is available for parking, on the basis of the obstacle position and speed data obtained by means of the radar sensors.

This type of analysis can be performed by neural networks that are instructed on the basis of profiles of cars, lorries, walls or other common obstacles. The processing unit provides, in step 130, for the assessment of the free manoeuvring area in accordance with the distance data $d_1$ and $d_2$ and with the directions in which the radars are pointing, from which it is possible to extract the lateral depth datum $p$. A timing device is advantageously activated in order to calculate the distance travelled by the vehicle after the identification of the first corner profile up to identification of the second corner profile, the relative speeds of movement of the obstacles detected by the radar as the vehicle passes being known.

The solution of the invention advantageously renders vehicle speed data unnecessary for establishing the distance travelled during the approach to the potential parking space since this information can be derived indirectly from the radars as relative speeds between the vehicle and the obstacles, since the obstacles are static.

If the processing unit finds conformity between the reconstructed profile of the free manoeuvring area and the overall outline of the vehicle in step 140, that is, the area that can be circumscribed on the overall outline of the vehicle with a predetermined margin of tolerance (the nominal minimum manoeuvring area), the processing unit supplies a corresponding consent signal to the driver and sets in operation a controlled automatic manoeuvring procedure (150), for example, by acting on the engine and the braking and steering systems in accordance with known algorithms.

The analysis of the manoeuvring area is advantageously kept active so as to correct any errors in the first assessments and to provide feedback (160) to the driver by means of a visual or sound interface.

If the processing unit detects a lack of conformity between the free manoeuvring area and the overall outline of the vehicle in step 140, that is, data which do not permit safe parking, it supplies a corresponding warning signal to the driver, preventing the automatic manoeuvring procedure - if it is provided for.

If the area available conforms to that of the vehicle, parking continues, optionally automatically, by control of the engine, brakes and steering.

*Rearward parking*

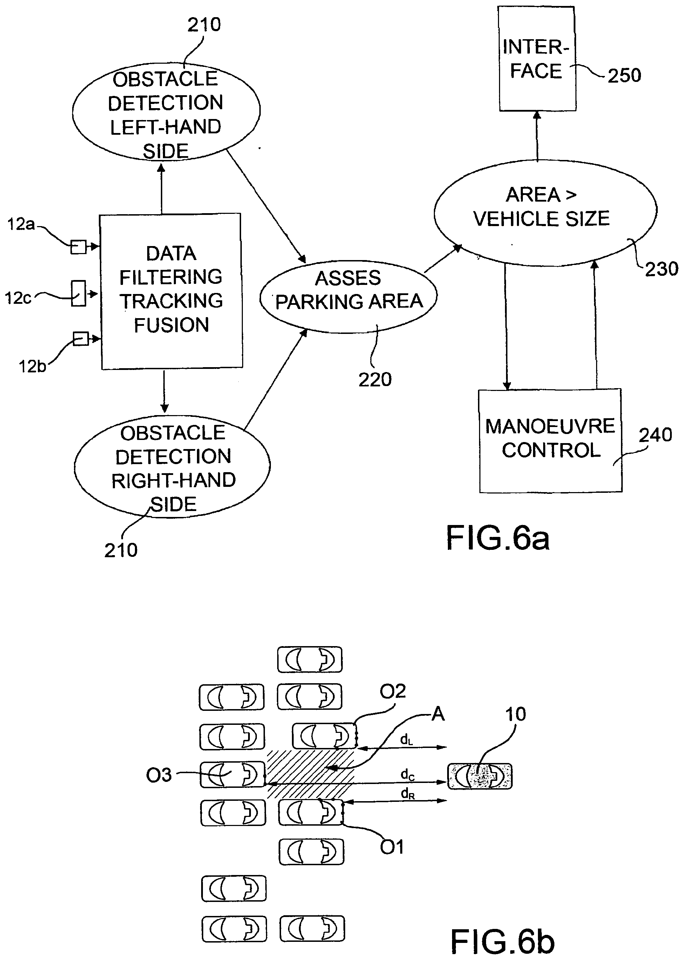

In an operating mode for assisting rearward parking, for example, in a parking bay, shown in Figures 6a and 6b, the vehicle has to be able to perform a safe manoeuvre for parking within a free area A of a parking bay determined by the distance $d_R$ from a first lateral obstacle O1 to the right of the vehicle, detected by the sensor 12a, by the distance $d_L$ from a second lateral obstacle 02 to the left of the vehicle, detected by the sensor 12b, and by the distance $d_C$ from a third, central obstacle 03 behind the vehicle, detected by the sensor 12c.

In general, the unit 20 is arranged to filter the data coming from the radar sensors and to compare the filtered data with a predetermined mask adapted to define a manoeuvring region of interest (a nominal minimum manoeuvring area), that is, a free area of dimensions appropriate for the size of the vehicle and the manoeuvring space necessary for parking it.

The processing unit performs a data tracking and fusion step to eliminate spurious signals and to cover possible missing obstacle signals with the use of prediction algorithms for a correlation with the already existing traces so as to obtain a plurality of obstacle detection data.

In steps 210 the obstacle detection data (identified in Figure 6b by discrete points along the profiles of stationary vehicles) is processed further to identify the presence of front corners or surfaces, that is, those closest to the vehicle, for delimiting the manoeuvring area A (indicated by hatching).

This type of analysis can be performed by neural networks that are instructed on the basis of profiles of cars, lorries, walls, or other common obstacles. The obstacle detection data obtained by a single acquisition may not be sufficient for the assessment of the manoeuvring area and the processing unit is therefore advantageously arranged to acquire several series of obstacle detection data from the sensors at different moments in time in the course of the parking manoeuvre. The processing unit provides, in step 220, for the assessment of the free manoeuvring area from time to time, in accordance with the distance and position data of the points which define the obstacles beside and behind the vehicle.

The solution of the invention advantageously renders vehicle speed data unnecessary for establishing the distance travelled in reverse since this information can be derived indirectly from the radars as the relative speed between the vehicle and the obstacles since the obstacles are static.

If the processing unit finds that the free manoeuvring area is appropriate for the overall outline of the vehicle in step 230, that is, that it can be circumscribed on the overall outline of the vehicle with a predetermined margin of tolerance (the nominal minimum manoeuvring area) the processing unit supplies a corresponding consent signal to the driver and sets in operation a procedure for controlled automatic manoeuvring (240), for example, by acting on the engine and the braking and steering system in accordance with known algorithms.

The analysis of the manoeuvring area is advantageously kept active so as to be able to correct any errors in the first assessments and to provide feedback (250) to the driver by means of a visual or sound interface.

If the processing unit finds that the free manoeuvring area is not appropriate for the overall outline of the vehicle in step 230, that is, that it does not permit safe parking, it supplies a corresponding warning signal to the driver, preventing the automatic manoeuvring procedure - if it is provided for.

*Lane changing*

When the vehicle is travelling at a cruising speed above a predetermined threshold, the plurality of sensors are oriented to observe a scene behind the vehicle in the lane in which it is travelling and in the adjacent lane. The system can provide feedback to the driver upon the arrival of vehicles behind, for example, by signalling dangerous conditions by means of acoustic and optical warnings and alerting the on-board protection systems. When the driver wishes to change lane deliberately, indicating his intention by means of the direction indicators, for example, in order to overtake or make a turn, the processing unit provides an indication as to whether the manoeuvre on that side is possible or risky, by means of haptic, sound or visual signals.

**Claims**

1.  A vehicle driving assistance system (10) including:

    a plurality of rear sensor devices (12a-12c) adapted to detect the presence of an obstacle within a field of view behind and/or beside the vehicle (10),
    processing means (20), arranged for assessing a free manoeuvring area (A) in a predetermined manoeuvring region in accordance with the position of at least one obstacle (O1-O3) detected, and
    means for detecting the running conditions of the vehicle and the actuation of manoeuvre signalling commands by the driver, the detecting means being adapted to emit a signal ($s_d$) indicative of the running condition of the vehicle and a signal ($s_{turn1}$, $s_{turn2}$) indicative of the signalling of a manoeuvre, respectively,
    whereby the processing means (20) are adapted to adopt one of a plurality of predetermined operating modes (LCA, RPA, LRPA, LLPA) relating to the assessment of the manoeuvring area (A) on the basis of the signals ($s_d$, $s_{turn1}$, $s_{turn2}$) indicative of the running conditions and manoeuvre signalling, and are arranged to calculate an assessed manoeuvring area (A) in accordance with a collection of obstacle position data (O1-O3) and to compare the assessed manoeuvring area (A) with a predetermined nominal minimum manoeuvring area,
    **characterized in that** said plurality of rear sensor devices include a plurality of orientable radar sensor devices (12a-12c) which are horizontally oriented so as to configure the respective horizontal field of view (Fa-Fc) in an integrated manner relative to the position of the vehicle (10), on the basis of the signals indicative of the running condition of the vehicle and of the driver's manoeuvre signalling commands.

2.  A system according to Claim 1 in which the signal ($s_d$) indicative of the running conditions of the vehicle (10) is adapted to distinguish between a condition of forward movement at a cruising speed above a first predetermined threshold, a condition of forward movement at an approach speed below a second predetermined threshold, and a reversing condition.

3.  A system according to Claim 1 in which the signal ($s_{turn1}$, $s_{turn2}$) indicative of the signalling of a manoeuvre is adapted to detect the activation of the direction indicator devices of the vehicle (10).

4.  A system according to Claim 2, in which the processing means (20) comprise a finite state machine arranged to switch between a plurality of predetermined operating modes (LCA, RPA, LRPA, LLPA) including at least a first, lateral parking operating mode (LRPA, LLPA) when a condition of forward movement at an approach speed is detected and a second, rearward parking operating mode (RPA) when a reversing condition is detected in the absence of the activation of the direction indicators.

5.  A system according to Claim 4, in which the finite states machine is arranged to switch to a third, lane-changing assistance operating mode (LCA) when a condition of forward movement at a cruising speed is detected.

6.  A system according to Claim 1, comprising at least a central rear sensor (12c) and a pair of lateral rear sensors (12a, 12b) adapted to turn their fields of view (Fc, Fa, Fb) selectively to the side of, or to the rear of the vehicle.

7.  A system according to Claim 1, in which the radar sensor devices (12a-12c) are adapted to measure the relative speed of movement between the vehicle and at least one detected obstacle (O1-O3).

8. A system according to Claim 6 or Claim 7, in which the finite state machine is arranged to output signals for controlling the orientable sensor devices (12a-12c), the signals being adapted to control the orientation of the devices in a manner such that the field of view (Fa-Fc) of the sensors is a short-range field of view facing sideways relative to the vehicle (10) on the parking side indicated by the direction indicators in the first, lateral parking operating mode (LLPA, LRPA), is a short-range field of view facing rearwardly relative to the vehicle (10) in the second, rearward parking operating mode (RPA), or is a long-range field of view facing rearwardly relative to the vehicle (10) in the third, lane-changing assistance operating mode (LCA).

9. A system according to any one of the preceding claims, in which the processing means (20) are arranged to locate a first corner profile and a second corner profile of successive obstacles (O1, 02) delimiting the manoeuvring area (A) when the vehicle (10) is in motion at an approach speed, and include a neural network for comparing the manoeuvring area (A) assessed with the nominal manoeuvring area.

10. A system according to any one of Claims 1 to 9, in which the processing means (20) are arranged to locate a first corner profile and a second corner profile of opposed, right-hand and left-hand obstacles (O1, 02) delimiting the manoeuvring area behind the vehicle, and include a neural network for comparing the manoeuvring area (A) assessed with the nominal manoeuvring area.

11. A system according to any one of the preceding claims, in which the processing means (20) can provide a consent signal and set in operation a controlled automatic procedure for manoeuvring the vehicle (10) if the manoeuvring area assessed (A) is larger than the nominal manoeuvring area.

## Patentansprüche

1. Fahrzeug-Fahrassistenzsystem (10), enthaltend:

   eine Mehrzahl von hinteren Sensoreinrichtungen (12a - 12c), die dafür ausgelegt sind, das Vorhandensein eines Hindernisses innerhalb eines Sichtfeldes hinter und/oder neben dem Fahrzeug (10) zu erfassen,
   eine Verarbeitungseinrichtung (20), die dafür ausgelegt ist, einen freien Manövrierbereich (A) in einem vorbestimmten Manövriergebiet in Übereinstimmung mit der Position mindestens eines erfassten Hindernisses (O1 - 03) zu bemessen, und
   eine Einrichtung zum Erfassen der Fahrbedingungen des Fahrzeugs und der Aktivierung von Manöversignalisierungsbefehlen durch den Fahrer, welche Erfassungseinrichtung dafür ausgelegt ist, ein Signal ($s_d$) auszugeben, das die Fahrbedingung des Fahrzeugs anzeigt, bzw. ein Signal ($s_{turn1}$, $s_{turn2}$), das die Signalisierung eines Manövers anzeigt,
   wobei die Verarbeitungseinrichtung (20) dafür ausgelegt ist, einen einer Mehrzahl von vorbestimmten Betriebsmodi (LCA, RPA, LRPA, LLPA) unter Bezugnahme auf die Bemessung des Manövrierbereichs (A) auf der Grundlage der die Fahrbedingungen und die Manöversignalisierung anzeigenden Signale ($s_d$, $s_{turn1}$, $s_{turn2}$) einzusetzen, und dafür angeordnet ist, einen bemessenen Manövrierbereich (A) in Übereinstimmung mit einer Sammlung von Hindernispositionsdaten (O1 - 03) zu berechnen und den bemessenen Manövrierbereich (A) mit einem vorbestimmten kleinsten Nenn-Manövrierbereich zu vergleichen,
   **dadurch gekennzeichnet, dass** die Mehrzahl der hinteren Sensoreinrichtungen eine Mehrzahl von ausrichtbaren Radarsensoreinrichtungen (12a - 12c) umfasst, die horizontal ausgerichtet sind, sodass sie das entsprechende horizontale Sichtfeld (Fa - Fc) in integrierter Weise relativ zu der Position des Fahrzeugs (10) auf der Grundlage der Signale, die die Fahrbedingungen des Fahrzeugs anzeigen, und der Manöversignalisierungsbefehle des Fahrers aufbauen.

2. System nach Anspruch 1, bei welchem das Signal ($s_d$), das die Fahrbedingungen des Fahrzeugs (10) anzeigt, dafür ausgelegt ist, zwischen einer Bedingung der Vorwärtsbewegung bei einer Reisegeschwindigkeit über einem ersten vorbestimmten Schwellenwert, einer Bedingung der Vorwärtsbewegung mit einer Annäherungsgeschwindigkeit unterhalb eines zweiten vorbestimmten Schwellenwerts und einer Rückwärtsfahrbedingung zu unterscheiden.

3. System nach Anspruch 1, bei welchem das Signal ($s_{turn1}$, $s_{turn2}$), das die Signalisierung eines Manövers anzeigt, dafür ausgelegt ist, die Aktivierung der Fahrtrichtungsanzeigeeinrichtungen des Fahrzeugs (10) zu erfassen.

4. System nach Anspruch 2, bei welchem die Verarbeitungseinrichtung (20) eine Endzustandsmaschine enthält, die dafür ausgelegt ist, zwischen einer Mehrzahl von vorbestimmten Betriebsmodi (LCA, RPA, LRPA, LLPA) umzuschalten, die zumindest einen ersten Seitwärtsparkbetriebsmodus (LRPA, LLPA), wenn eine Bedingung der Vorwärtsbewegung bei einer Annäherungsgeschwindigkeit erfasst wird, und einen zweiten Rückwärtsparkbetriebsmodus (RPA) umfassen, wenn eine Rückwärtsfahrbedingung bei fehlender Aktivierung der Fahrtrichtungsanzeiger erfasst wird.

5. System nach Anspruch 4, bei welchem die Endzustandsmaschine dafür ausgelegt ist, auf einen dritten Spurwechselunterstützungsbetriebsmodus (LCA) umzuschalten, wenn die Bedingung der Vorwärtsbewegung bei einer Reisegeschwindigkeit erfasst wird.

6. System nach Anspruch 1, enthaltend mindestens einen mittigen hinteren Sensor (12c) und ein Paar seitlicher hinterer Sensoren (12a, 12b), die dafür ausgelegt sind, ihre Sichtfelder (Fc, Fa, Fb) selektiv zur Seite oder zur Rückseite des Fahrzeugs zu schwenken.

7. System nach Anspruch 1, bei welchem die Radarsensoreinrichtungen (12a - 12c) dafür ausgelegt sind, die relative Bewegungsgeschwindigkeit zwischen dem Fahrzeug und mindestens einem erfassten Hindernis (O1 - 03) zu messen.

8. System nach Anspruch 6 oder Anspruch 7, bei welchem die Endzustandsmaschine dafür ausgelegt ist, Signale zur Steuerung der ausrichtbaren Sensoreinrichtungen (12a - 12c) auszugeben, welche Signale dafür ausgelegt sind, die Ausrichtung der Einrichtungen in einer Weise zu steuern, dass das Sichtfeld (Fa - Fc) der Sensoren in dem ersten Seitwärtsparkbetriebsmodus (LRPA, LLPA) ein Nahbereichsichtfeld ist, das in Bezug auf das Fahrzeug (10) auf die durch die Fahrtrichtungsanzeiger angezeigte Parkseite weist, in dem zweiten, Rückwärtsparkbetriebsmodus (RPA) ein Nahbereichsichtfeld ist, das in Bezug auf das Fahrzeug (10) nach hinten weist, oder in dem dritten Spurwechselunterstützungsbetriebsmodus (LCA) ein Fernbereichssichtfeld ist, das in Bezug auf das Fahrzeug (10) nach hinten weist.

9. System nach einem der vorhergehenden Ansprüche, bei welchem die Verarbeitungseinrichtung (20) dafür ausgelegt ist, ein erstes Eckprofil und ein zweites Eckprofil von aufeinanderfolgenden Hindernissen (O1, 02) zu erfassen, die den Manövrierbereich (A) begrenzen, wenn das Fahrzeug (10) mit einer Annäherungsgeschwindigkeit in Bewegung ist, und ein neurales Netz enthält, um den bemessenen Manövrierbereich (A) mit dem Nenn-Manövrierbereich zu vergleichen.

10. System nach einem der Ansprüche 1 bis 9, bei welchem die Verarbeitungseinrichtung (20) dafür ausgelegt ist, ein erstes Eckprofil und ein zweites Eckprofil von einander gegenüberliegenden rechtsseitigen und linksseitigen Hindernissen (O1, 02) zu erfassen, die den Manövrierbereich hinter dem Fahrzeug begrenzen, und ein neurales Netz enthält, um den bemessenen Manövrierbereich (A) mit dem Nenn-Manövrierbereich zu vergleichen.

11. System nach einem der vorhergehenden Ansprüche, bei welchem die Verarbeitungseinrichtung (20) ein Zustimmungssignal bereitstellen kann und einen gesteuerten automatischen Vorgang zum Manövrieren des Fahrzeugs (10) in Betrieb setzen kann, wenn der bemessene Manövrierbereich (A) größer als der Nenn-Manövrierbereich ist.

## Revendications

1. Système d'aide à la conduite de véhicule (10) comportant :

une pluralité de dispositifs de capteur arrière (12a à 12c) adaptés pour détecter la présence d'un obstacle dans un champ de vision derrière et/ou à côté du véhicule (10),
des moyens de traitement (20), conçus pour évaluer une zone de libre manoeuvre (A) dans une région de manoeuvre prédéterminée conformément à la position d'au moins un obstacle (O1 à 03) détecté, et
des moyens de détection des conditions de circulation du véhicule et de l'actionnement d'ordres de signalisation de manoeuvre par le conducteur, les moyens de détection étant adaptés pour émettre un signal ($s_d$) indicatif de la condition de circulation du véhicule et un signal ($s_{turn1}$, $s_{turn2}$) indicatif de la signalisation d'une manoeuvre, respectivement,
moyennant quoi les moyens de traitement (20) sont adaptés pour adopter l'un d'une pluralité de modes de fonctionnement (LCA, RPA, LRPA, LLPA) prédéterminés relatifs à l'évaluation de la zone de manoeuvre (A) sur la base des signaux ($s_d$, $s_{turn1}$, $s_{turn2}$) indicatifs des conditions de circulation et d'une signalisation de manoeuvre, et sont conçus pour calculer une zone de manoeuvre (A) évaluée conformément à un recueil de données de position d'obstacle (O1 à 03) et pour comparer la zone de manoeuvre (A) évaluée à une zone de manoeuvre minimale nominale prédéterminée,

**caractérisé en ce que** ladite pluralité de dispositifs de capteur arrière comportent une pluralité de dispositifs de capteur radar orientables (12a à 12c) qui sont orientés à l'horizontale de façon à configurer le champ de vision horizontal (Fa à Fc) respectif d'une manière intégrée par rapport à la position du véhicule (10), sur la base des signaux indicatifs de la condition de circulation du véhicule et des ordres de signalisation de manoeuvre du conducteur.

2. Système selon la revendication 1, dans lequel le signal ($s_d$) indicatif des conditions de circulation du véhicule (10) est adapté pour faire la distinction entre une condition de déplacement en marche avant à une vitesse de croisière supérieure à un premier seuil prédéterminé, une condition de déplacement en marche avant à une vitesse d'approche inférieure à un second seuil prédéterminé, et une condition de marche arrière.

3. Système selon la revendication 1, dans lequel le signal ($s_{turn1}$, $s_{turn2}$) indicatif de la signalisation d'une manoeuvre est adapté pour détecter l'activation des dispositifs indicateurs de direction du véhicule (10).

4. Système selon la revendication 2, dans lequel les moyens de traitement (20) comprennent une machine à états finis conçue pour passer entre une pluralité de modes de fonctionnement (LCA, RPA, LRPA, LLPA) prédéterminés comportant au moins un premier mode de fonctionnement de stationnement latéral (LRPA, LLPA) lorsqu'une condition de déplacement en marche avant à une vitesse d'approche est détectée et un deuxième mode de fonctionnement de stationnement en arrière (RPA) lorsqu'une condition de marche arrière est détectée en l'absence de l'activation des indicateurs de direction.

5. Système selon la revendication 4, dans lequel la machine à états finis est conçue pour passer à un troisième mode de fonctionnement d'aide au changement de file (LCA) lorsqu'une condition de déplacement en marche avant à une vitesse de croisière est détectée.

6. Système selon la revendication 1, comprenant au moins un capteur arrière central (12c) et une paire de capteurs arrière latéraux (12a, 12b) adaptés pour tourner leurs champs de vision (Fc, Fa, Fb) sélectivement vers le côté ou vers l'arrière du véhicule.

7. Système selon la revendication 1, dans lequel les dispositifs de capteur radar (12a à 12c) sont adaptés pour mesurer la vitesse de déplacement relative entre le véhicule et au moins un obstacle (O1 à 03) détecté.

8. Système selon la revendication 6 ou la revendication 7, dans lequel la machine à états finis est conçue pour fournir en sortie des signaux pour commander les dispositifs de capteur orientables (12a à 12c), les signaux étant adaptés pour commander l'orientation des dispositifs de manière à ce que le champ de vision (Fa à Fc) des capteurs soit un champ de vision de courte portée en regard vers le côté par rapport au véhicule (10) sur le côté de stationnement indiqué par les indicateurs de direction dans le premier mode de fonctionnement de stationnement latéral (LLPA, LRPA), soit un champ de vision de courte portée en regard vers l'arrière par rapport au véhicule (10) dans le deuxième mode de fonctionnement de stationnement en arrière (RPA), ou soit un champ de vision de longue portée en regard vers l'arrière par rapport au véhicule (10) dans le troisième mode de fonctionnement d'aide au changement de file (LCA).

9. Système selon l'une quelconque des revendications précédentes, dans lequel les moyens de traitement (20) sont conçus pour localiser un premier profil de coin et un second profil de coin d'obstacles (O1, 02) successifs délimitant la zone de manoeuvre (A) lorsque le véhicule (10) est en mouvement à une vitesse d'approche, et comportent un réseau neuronal pour comparer la zone de manoeuvre (A) évaluée à la zone de manoeuvre nominale.

10. Système selon l'une quelconque des revendications 1 à 9, dans lequel les moyens de traitement (20) sont conçus pour localiser un premier profil de coin et un second profil de coin d'obstacles (O1, 02) à gauche et à droite opposés délimitant la zone de manoeuvre derrière le véhicule, et comportent un réseau neuronal pour comparer la zone de manoeuvre (A) évaluée à la zone de manoeuvre nominale.

11. Système selon l'une quelconque des revendications précédentes, dans lequel les moyens de traitement (20) peuvent fournir un signal de consentement et régler en fonctionnement une procédure automatique commandée pour manoeuvrer le véhicule (10) si la zone de manoeuvre (A) évaluée est plus grande que la zone de manoeuvre nominale.

FIG.1

EP 2 148 220 B1

**FIG.2a**

**FIG.2b**

FIG.3a

FIG.3b

FIG.3c

FIG.3d

OldState = = LRPA
/ OldState = STOP

Key = = On

Key = =Off
/ OldState = RPA

/ OldState = STOP

Key = = Off
/ OldState = LLPA

Key = = Off
/ OldState = LRPA

START/STOP

Key = = Off
/ OldState = LCA

LANE-
CHANGING
ASSISTANCE

OldState = = LLPA
/ OldState = STOP

T0
/ OldState = LRPA

LCA

APPROCH
SPEED OR
PRESSING
OF
BUTTON

RIGHT-HAND
LATERAL PARKING
ASSISTANCE

LRPA

RIGHT DIRECT IND.

LEFT DIRECT IND.

REVERSE
GEAR

/ OldState = LCA

T0
&
OldState = = STOP
/ OldState = LCA

T0
/ OldState = LLPA

REWARD PARKING
ASSISTANCE

LEFT-HAND
LATERAL PARKING
ASSISTANCE

RPA

LLPA

FIG.4

120

SEARCH
FOR SECOND
OBSTACLE

INTER-
FACE

160

12a

12c

12b

DATA
FILTERING
TRACKING
FUSION

130

ASSES
PARKING
AREA

AREA >
VEHICLE SIZE

140

SEARCH
FOR FIRST
OBSTACLE

MANOEUVRE
CONTROL

150

110

FIG.5a

FIG.5b

210

OBSTACLE
DETECTION
LEFT-HAND
SIDE

INTER-
FACE ~250

12a

DATA
FILTERING
TRACKING
FUSION

12c

12b

ASSES
PARKING
AREA

AREA >
VEHICLE SIZE

230

220

MANOEUVRE
CONTROL ~240

OBSTACLE
DETECTION
RIGHT-HAND
SIDE

210

## FIG.6a

O2

A

10

$d_L$

O3

$d_C$

$d_R$

O1

## FIG.6b

**EP 2 148 220 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4931930 A
- DE 10349755
- US 6265968 B